# EUROPÄISCHE PATENTSCHRIFT

(11) **EP 3 324 487 B1**
(45) Veröffentlichungstag und Bekanntmachung des Hinweises auf die Patenterteilung: **30.12.2020**
(21) Anmeldenummer: 17200262.8
(22) Anmeldetag: 07.11.2017
(51) Int. Cl.: H01R 4/02, H01R 4/62, H01R 43/02, B23K 26/36, B23K 26/361, B23K 101/38, B23K 20/10

(54) **VERBINDUNG EINES ELEKTRISCHEN LEITERS MIT EINEM ANSCHLUSSTEIL**
CONNECTION OF AN ELECTRICAL CONDUCTOR WITH A CONNECTING PART
RACCORDEMENT D'UN CONDUCTEUR ÉLECTRIQUE AVEC UNE PARTIE DE RACCORDEMENT

(30) Priorität: 16.11.2016 DE 102016121979; 28.12.2016 DE 102016125748
(43) Veröffentlichungstag der Anmeldung: 23.05.2018
(73) Patentinhaber: Auto-Kabel Management GmbH, 79688 Hausen i.W. (DE)
(72) Erfinder: Scharkowski, Oliver, 79669 Zell im Wiesental (DE)
(74) Vertreter: Cohausz & Florack

(56) Entgegenhaltungen:
- DE-A1-102014 207 414
- DE-B3-102014 206 283
- US-A1- 2014 366 456

## Beschreibung

Die Erfindung betrifft ein Verfahren zur Herstellung einer Verbindung eines elektrischen Leiters mit einem Anschlussteil sowie eine Verbindung eines elektrischen Leiters mit einem Anschlussteil.

Im Kraftfahrzeugbereich werden heute aus Gründen der Gewichtsreduktion vorzugsweise Aluminiumleiter zur Stromübertragung eingesetzt. Der Anschluss der Verbraucher erfolgt jedoch in der Regel über flexible Kupferleiter.

Im Hinblick auf die notwendige Verbindung zwischen den Aluminium- und Kupferleitern ergibt sich dabei jedoch insbesondere in feuchten Umgebungen das Problem von Kontaktkorrosion im Kontaktbereich der sortenunreinen Verbindungen, da die Bildung von Korrosion an der Grenzfläche zweier unterschiedlicher Metalle bzw. Metallverbindungen begünstigt ist. Insbesondere bei sortenunreinen Verbindungen zweier Metalle bzw. Metallverbindungen, bei denen sich die Verbindungspartner bezüglich ihrer Redoxpotentiale stark unterscheiden, wird die Korrosion des unedleren der beiden Metalle bzw. Metallverbindungen gefördert.

Zur Vermeidung dieses Problems werden heute vielfach bimetallische Anschlusselemente mit einer metallischen Kontaktschicht verwendet, mittels derer auch sortenunreine Verbindungen hergestellt werden können ohne dass Kontaktkorrosion auftritt. Die metallische Kontaktschicht des bimetallischen Anschlusselements ist dabei vorzugsweise aus demselben Material wie einer der beiden zu verbindenden sortenunreinen Verbindungspartner gebildet, wohingegen der übrige Teil des Anschlusselementes vorzugsweise aus dem Material des anderen Verbindungspartners gebildet ist, so dass zwei sortenunreine Verbindungspartner über ein bimetallisches Anschlusselement sortenrein miteinander elektrisch verbunden werden können.

Bei der Herstellung einer sortenunreinen Verbindung mittels bimetallischer Anschlusselemente ergibt sich jedoch ein Problem dadurch, dass vor der Herstellung der Verbindung zunächst in der Regel noch eine über der metallischen Kontaktschicht angeordnete schützende Beschichtung entfernt werden muss. Durch die Entfernung der Beschichtung ergibt sich dabei der Nachteil, dass die von der Beschichtung gereinigte Fläche der metallischen Kontaktschicht stark zur Oxidbildung neigt, was der Herstellung einer langlebigen und zuverlässigen stoffschlüssigen Verbindung eines elektrischen Leiters auf der metallischen Kontaktschicht entgegenwirkt.

Die Veröffentlichung DE 10 2014 206 283 betrifft eine elektrische Kontaktverbindung zwischen einem Leiter aus einem ersten Material, insbesondere Aluminium und einem Kontaktelement aus einem zweiten Material, insbesondere Kupfer. Die Erfindung betrifft weiterhin ein Verfahren zur Herstellung einer solchen Kontaktverbindung.

Aus diesem Grund lag dem Gegenstand die Aufgabe zugrunde, ein Verfahren zur Herstellung einer sortenunreinen Verbindung eines elektrischen Leiters mit einem Anschlussteil zur Verfügung zu stellen, das auf eine einfache Art und Weise eine möglichst langlebige und zuverlässige, insbesondere korrosionsbeständige Verbindung der Verbindungspartner gewährleistet.

Diese Aufgabe wird gegenständlich durch ein Verfahren zur Herstellung einer Verbindung eines elektrischen Leiters mit einem Anschlussteil nach Anspruch 1 sowie durch eine Verbindung eines elektrischen Leiters mit einem Anschlussteil nach Anspruch 10 gelöst.

Es ist erkannt worden, dass die Oberfläche einer mit einer Oxidschicht überzogenen metallischen Kontaktschicht durch die Bearbeitung mit einer Sonotrode derart modifiziert werden kann, dass in einem daran anschließenden Verfahrensschritt eine deutlich bessere Anbindung eines elektrischen Leiters an die modifizierte metallische Kontaktschicht hergestellt werden kann.

Daher wird gemäß dem gegenständlichen Verfahren zur Herstellung einer Verbindung eines elektrischen Leiters mit einem Anschlussteil über ein Zwischenelement vorgeschlagen, dass vor oder nach einem Freilegen einer an einer ersten Oberfläche des Zwischenelements angeordneten metallischen Kontaktschicht, das Zwischenelement zunächst mit dem Anschlussteil stoffschlüssig über ein Ultraschallschweißverfahren verbunden wird, bevor anschließend ein stoffschlüssiges Verbinden des elektrischen Leiters mit der metallischen Kontaktschicht des Zwischenelements über ein Ultraschallschweißverfahren erfolgt.

Dadurch, dass die vorzugsweise freigelegte metallische Kontaktschicht, bei der Ausbildung der Verbindung des Zwischenelements mit dem Anschlussteil, durch den Kontakt der Sonotrode mit der Kontaktschicht hinsichtlich ihrer Oberflächenstruktur modifiziert wird, kann anschließend eine langlebigere und zuverlässigere Anbindung eines elektrischen Leiters an das Zwischenelement erfolgen.

Da der in dem gegenständlichen Verfahren verwendete elektrische Leiter aus mehreren Drähten oder Litzen gebildet ist, weist die Kontaktfläche des Zwischenelements - nach dem ersten Schweißvorgang zur Verbindung des Zwischenelements mit dem Anschlussteil - vorzugsweise eine flächige, nicht zu tiefe Riefenstruktur auf, so dass für den aus mehreren Drähten oder Litzen gebildeten elektrischen Leiter eine bessere Reibung zwischen den Fügepartnern erzeugt wird, wodurch die Oberfläche des Schweißbereichs für den elektrischen Leiter erhöht wird, so dass eine bessere Anbindung des Leiters an das Zwischenelement erfolgen kann.

Um eine optimale Anbindung des elektrischen Leiters an das Zwischenelement zu gewährleisten, wird deshalb vorgeschlagen, dass die für die Ausbildung der stoffschlüssigen Verbindung des Zwischenelements mit dem Anschlussteil verwendeten Sonotrodenköpfe vorzugsweise an die Oberflächenstruktur des anschließend mit dem Zwischenelement zu verbindenden elektrischen Leiters angepasst sind. Insbesondere können die verwendeten Sonotrodenköpfe eine zu dem Oberflächenprofil des verwendeten elektrischen Leiters komplementäre Schweißkontur aufweisen.

Neben einer mit Riefen versehenden Auflageoberfläche kann die Auflageoberfläche der Sonotrode dementsprechend auch Rillen, Rippen, Perlen oder Noppen aufweisen, die in variabler Größe, Breite und Tiefe sowie in variablem Abstand auf der Auflagefläche der Sonotrode angeordnet sein können.

Bei dem aus mehreren Drähten oder Litzen gebildeten elektrischen Leiter kann es sich um einen Leitergeflecht oder um einen Litzenleiter handeln. Als Litzenleiter kann der elektrische Leiter vorzugsweise als Bündelitzenleiter, besonders bevorzugt als semikonzentrischer oder konzentrischer Leiter gebildet sein.

Gemäß einem vorteilhaften Ausführungsbeispiel wird vorgeschlagen, dass der aus mehreren Drähten oder Litzen gebildete elektrische Leiter ein aus mindestens 7 Drähten, vorzugsweise aus mindestens 19 Drähten, besonders bevorzugt aus mindestens 37 Drähten gebildeter konzentrischer Leiter ist.

Das gemäß dem gegenständlichen Verfahren verwendete Anschlussteil ist vorteilhafterweise ein zumindest in Teilbereichen im Wesentlichen flach gebildetes Werkstück, vorzugsweise ist das Anschlussteil als Flachteil, insbesondere als Flachleiter gebildet.

Gemäß einer alternativen Ausführungsform kann das Anschlussteil auch als Kabelschuh gebildet sein, insbesondere als Reibschweißkabelschuh, Crimpkabelschuh oder Ultraschallschweißkabelschuh.

Der elektrische Leiter ist gegenständlich aus einem anderen Material gebildet, als das Anschlussteil. Gemäß einem bevorzugten Ausführungsbeispiel ist der elektrische Leiter aus einem Nichteisenmetallwerkstoff gebildet, insbesondere aus einem Kupferwerkstoff, wohingegen das Anschlussteil vorzugsweise auch aus einem Nichteisenmetallwerkstoff, insbesondere einem Aluminiumwerkstoff gebildet sein kann. Alternativ zu einer Ausführungsform, in der der elektrische Leiter aus einem Kupferwerkstoff und das Anschlussteil aus einem Aluminiumwerkstoff gebildet ist, kann gemäß einer weiteren Ausführung auch der elektrische Leiter aus einem Aluminiumwerkstoff und das Anschlussteil aus einem Kupferwerkstoff gebildet sein.

Das zwischen dem elektrischen Leiter und dem Anschlussteil angeordnete Zwischenelement ist dabei zu Teilen aus dem Werkstoff des elektrischen Leiters und zu Teilen aus dem Werkstoff des Anschlussteils gebildet.

Dabei ist das Zwischenelement aus dem Werkstoff des Anschlussteils gebildet und weist eine an der Oberfläche des Anschlussteils angeordnete Kontaktschicht aus dem Werkstoff des elektrischen Leiters auf. Die Kontaktschicht ist dabei vorzugsweise in einer Nut des Zwischenelements angeordnet, so dass die Kontaktschicht vorteilhafterweise bündig mit der Oberfläche des Zwischenelements abschließt. Die vorzugsweise auf der Oberfläche des Zwischenelements und der Kontaktschicht aufgetragene Schutzbeschichtung ist vorzugsweise eine leitende Beschichtung, insbesondere eine Nickel- oder Zinnbeschichtung.

Es versteht sich, dass der Begriff "Werkstoff" im Rahmen dieser Anmeldung sowohl das entsprechende Metall, als auch jegliche mögliche Legierungen des entsprechenden Metalls umfasst. Beispielsweise werden im Rahmen dieser Anmeldung von dem Begriff Kupferwerkstoff sowohl Reinstkupfer, als auch jegliche möglichen Kupferlegierungen, wie Bronze, Messing, Rotguss, Kupfer-Aluminium Legierungen und dergleichen umfasst.

Im Übrigen versteht sich, dass ebenso von dem Begriff "metallisch", sowohl ein Metall, als auch eine entsprechende Metalllegierung umfasst ist.

Gemäß der Erfindung wird vorgeschlagen, dass in einem ersten Schritt des gegenständlichen Verfahrens vorzugsweise die zur Verbindung des elektrischen Leiters mit dem Anschlussteil verwendeten Zwischenelemente bereitgestellt werden, indem eine an einer ersten Oberfläche des Zwischenelements angeordnete metallische Kontaktschicht freigelegt wird.

Hierzu wird vorgeschlagen, dass die Zwischenelemente schon vorgefertigt sind und von einem Coil als Bandware bereitgestellt werden. Vorzugsweise kann das Band mit den vorgefertigten Zwischenelementen dabei über ein Transportband transportiert werden, so dass zur Fertigstellung der Zwischenelemente nur noch ein Teil einer auf der Oberfläche der Zwischenelemente angeordneten Schutzbeschichtung entfernt werden muss, bevor das Zwischenelement vom Band abgetrennt und verwendet werden kann.

Die vorzugsweise auf der Oberfläche des Zwischenelements angeordnete Beschichtung wird vorteilhafterweise erst unmittelbar vor Verwendung der Zwischenelemente entfernt, da die freigelegten Bereiche des Zwischenelements nach Entfernung der Beschichtung stark zur Oxidbildung neigen, was der Ausbildung einer stabilen und langlebigen Verbindung auf den entsprechenden Bereichen entgegenwirkt.

Um die entsprechenden Bereiche der Schutzbeschichtung auf einfache und gleichzeitig prozesstechnisch präzise Weise zu entfernen, wird vorgeschlagen, dass zur Entfernung der Schutzbeschichtung eine Strahlungsquelle verwendet wird, insbesondere eine Laserstrahlungsquelle.

Mit Hilfe einer Laserstrahlungsquelle können ausgewählte Bereiche der Schutzschicht mit Laserstrahlung hoher Energiedichte bestrahlt werden, um Beschichtungspartikel zu verdampften und ausgewählte Bereiche der Schutzschicht zu entfernen. Über entsprechende optische Bauelemente sind sowohl die Energiedichte der Strahlung, als auch der zu bestrahlende Bereich sehr präzise einstellbar, wodurch auch eine äußerst präzise Auswahl der zu entfernenden Fläche und Schichtdicke erfolgen kann.

Um ein schnelles Entfernen der Beschichtung in den ausgewählten Bereichen zu gewährleisten, wird vorgeschlagen, eine gepulste Laserstrahlungsquelle vorzugsweise im UV-Bereich zu verwenden, insbesondere einen Eximerlaser. Alternativ können auch gepulste CO₂-Laser, gepulste Nd:YaG.-Laser oder gepulste Femtosekundenlaser verwendet werden. Mit Hilfe von gepulsten Strahlungsquellen kann die Bestrahlungsdauer der ausgewählten Bereiche einfach über die Pulsdauer, die Pulsfrequenz sowie die Geschwindigkeit der Fortbewegung des Förderbandes ausgewählt werden.

Alternativ zur Auswahl der von der Strahlungsquelle bestrahlten Fläche über vor der Strahlungsquelle positionierte optische Bauelemente, können auch Schablonen über den als Bandware bereitgestellten Zwischenelementen angeordnet sein, so dass gewährleistet wird, dass die Beschichtung nur in den ausgewählten Bereichen entfernt wird.

Nach einer weiteren Ausgestaltung des Verfahrens wird die schützende Beschichtung in dem Kontaktbereich im Wesentlichen rückstandsfrei entfernt. "Im Wesentlichen rückstandsfrei" bedeutet hier vorzugsweise, dass in dem Kontaktbereich, insbesondere auf der Oberfläche des Kontaktbereichs, wenigstens 95%, bevorzugt wenigstens 98%, weiter bevorzugt wenigstens 99% der Beschichtung entfernt werden. Damit kann eine besonders reine Oberfläche des Kontaktbereichs zum Anschließen eines Leiters oder Kabels, beispielsweise durch Schweißen, insbesondere Ultraschallschweißen, bereitgestellt werden. Insbesondere kann die Entfernung derart sein, dass die Beschichtung im Kontaktbereich keine geschlossene Fläche bzw. Abdeckung des Kontaktbereichs mehr darstellt.

Dabei kann das Strahlverfahren neben dem Entfernen der Beschichtung auch dem Reinigen und Glätten der Oberfläche des Kontaktbereichs dienen. Im Vergleich zu Maskierverfahren besteht hier der Vorteil, dass nach dem Entfernen der Beschichtung keine verfahrensbedingten Verunreinigungen, wie z. B. Klebstoffrückstände oder Bandreste im Kontaktbereich anhaften.

Nach einer Weiterbildung des gegenständlichen Verfahrens kann durch die Strahlungsquelle nicht nur die Beschichtung entfernt werden, sondern auch die Rauheit der Oberfläche des freigelegten Kontaktbereichs durch eine Oberflächenbearbeitung mit der Strahlquelle eingestellt werden, um die Stabilität einer später auf der Kontaktfläche ausgebildeten stoffschlüssigen Verbindung weiter zu verbessern. Dabei kann die Oberfläche des freigelegten Kontaktbereichs nach der Oberflächenbearbeitung insbesondere einen nach EN ISO 25178 bestimmten arithmetischen Mittenrauwert Ra von weniger als 15 pm, bevorzugt weniger als 10 pm, weiter bevorzugt weniger als 5 pm aufweisen.

Die Oberflächenbearbeitung kann dabei unmittelbar nach dem Schichtabtrag erfolgen. Beispielweise kann der Strahl nach dem im Wesentlichen rückstandsfreien Entfernen der Beschichtung für eine vorgegebene Zeitdauer von beispielsweise wenigstens 2 s, bevorzugt wenigstens 1 s, weiter bevorzugt wenigstens 0,5 s auf die Oberfläche des freigelegten Kontaktbereichs einwirken, um die geforderte Rauheit einzustellen.

Alternativ zur Entfernung ausgewählter Bereiche der Schutzschicht mittels Laserstrahlung können auch andere Verfahren zur Entfernung der Schutzschicht verwendet werden, insbesondere Verfahren der physikalischen Gasphasenabscheidung wie thermisches Verdampfen, Elektronenstrahlverdampfen, Lichtbogenverdampfen, Sputtern oder dergleichen.

Gemäß einem weiteren bevorzugten Ausführungsbeispiel wird, zur Minimierung der Wahrscheinlichkeit der Bildung einer Oxidschicht auf der freigelegten metallischen Kontaktschicht, vorgeschlagen, zumindest den ersten Verfahrensschritt der Entfernung der auf den Zwischenelementen angeordneten Schutzschicht zumindest teilweise unter Sauerstoffausschluss, vorzugsweise in evakuierten Räumen durchzuführen.

Eine Durchführung des gemäß einer vorteilhaften Ausführungsform vorgeschlagenen ersten Verfahrensschritts unter Vakuum hat zudem den zusätzlichen positiven Effekt der Möglichkeit einer einfachen Entfernung der durch die Strahlungsquelle verdampften Beschichtungspartikel über eine in diesem Fall notwendigerweise zu verwendende Pumpe.

Alternativ oder in Kombination zur Reduktion der Wahrscheinlichkeit einer Kontaminierung durch Sauerstoff über eine Evakuierung des Arbeitsbereichs, kann der erste Verfahrensschritt auch unter Schutzgasatmosphäre, insbesondere unter Stickstoff oder Argon-Atmosphäre durchgeführt werden.

Im Hinblick auf die Möglichkeit einer weiteren Minimierung der Wahrscheinlichkeit der Ausbildung einer Oxidschicht auf dem freigelegten Bereich des Zwischenelements wird vorgeschlagen, in einem weiteren potentiell auch ersten Schritt des gegenständlichen Verfahrens, in dem das Zwischenelement mittels eines Ultraschallschweißverfahrens unmittelbar über die der ersten Oberfläche des Zwischenelements gegenüberliegende zweite Oberfläche des Zwischenelements stoffschlüssig mit dem Anschlussteil verbunden wird, vorzugsweise zeitlich unmittelbar im Anschluss an den gemäß einer vorteilhaften Ausführungsform vorgeschlagenen ersten Verfahrensschritt auszuführen, so dass auch für den darauf folgenden Verfahrensschritt ein sicheres Einbringen der Schweißenergie gewährleistet ist.

Ferner wird gemäß einem bevorzugten Ausführungsbeispiel im Hinblick auf einen potentiellen dritten Schritt des gegenständlichen Verfahrens, in dem der elektrische Leiter mittels eines Ultraschallschweißverfahrens unmittelbar über das Zwischenelementstoffschlüssig mit dem Anschlussteil verbunden wird, vorgeschlagen, dass die Drähte oder Litzen des elektrischen Leiters vor und/oder während des stoffschlüssigen Verbindens zumindest an einem stirnseitigen Ende mit dem Zwischenelement verpresst werden. Durch das Zusammenpressen des Leiters kann aufgrund der dichteren Anordnung der Litzen eine stabilere Verbindung zwischen dem Litzenleiter und dem Zwischenelement erzielt werden. Zudem ist der Leiter nach einem Verpressen weniger anfällig für das Eindringen von Feuchtigkeit und weist somit eine geringere Korrosionsempfindlichkeit auf.

Nach einem weiteren Aspekt betrifft der Gegenstand eine Verbindung eines aus mehreren Drähten oder Litzen eines ersten Metallwerkstoffs gebildeten elektrischen Leiters mit einem vorzugsweise als Flachleiter gebildeten Anschlussteil, insbesondere hergestellt nach einem in voranstehend beschriebener Weise gegenständlich ausgeführten Verfahren.

Gemäß der Erfindung ist das Anschlussteil aus einem von dem ersten Metallwerkstoff verschiedenen zweiten Metallwerkstoff gebildet und mit dem elektrischen Leiter über ein unmittelbar zwischen dem elektrischen Leiter und dem Anschlussteil angeordnetes Zwischenelement elektrisch verbunden.

Das Zwischenelement der Verbindung ist in dieser Ausführungsform vorzugsweise aus dem zweiten Metallwerkstoff gebildet und weist vorzugsweise eine aus dem ersten Metallwerkstoff gebildete, an einer ersten Oberfläche des Zwischenelements angeordnete metallische Kontaktschicht auf.

Gemäß der oben beschriebenen bevorzugten Ausführungsform ist das Zwischenelement schließlich über die an der ersten Oberfläche des Zwischenelements angeordnete metallische Kontaktschicht stoffschlüssig mit dem elektrischen Leiter verbunden, wohingegen das Zwischenelement über eine der ersten Oberfläche gegenüberliegende zweite Oberfläche des Zwischenelements zudem stoffschlüssig mit dem Anschlussteil verbunden ist.

Der elektrische Leiter ist dabei vorzugsweise aus einem Kupferwerkstoff gebildet, wohingegen das Anschlussteil vorzugsweise aus einem Aluminiumwerkstoff gebildet ist.

Alternativ kann gemäß einer anderen Ausführungsform auch der der elektrische Leiter aus einem Aluminiumwerkstoff und das Anschlussteil aus einem Kupferwerkstoff gebildet sein.

Das in der gegenständlichen Verbindung zwischen dem elektrischen Leiter und dem Anschlussteil angeordnete Zwischenelement ist vorzugsweise aus einem ähnlichen, insbesondere aus demselben Werkstoff wie das Anschlussteil gebildet und weist eine an der Oberfläche des Anschlussteils angeordnete metallische Beschichtung auf, die vorteilhafterweise aus einem ähnlichen, insbesondere aus demselben Werkstoff gebildet ist, wie der elektrische Leiter. Die metallische Beschichtung ist dabei vorzugsweise in einer Nut des Zwischenelements angeordnet, so dass die Kontaktschicht vorteilhafterweise bündig mit der Oberfläche des Zwischenelements abschließt.

Die gegenständlich auf der Oberfläche des Zwischenelements und der Kontaktschicht aufgetragene Schutzbeschichtung ist vorzugsweise eine von dem ersten und zweiten verschiedenen Metallwerkstoff gebildete Beschichtung, insbesondere eine elektrisch leitende Beschichtung.

Gemäß einem Ausführungsbeispiel wird vorgeschlagen, dass das Zwischenelement zumindest teilweise mit der Beschichtung beschichtet ist, insbesondere im Kontaktbereich von sortenunreinen Verbindungen. Die Beschichtung ist vorzugsweise metallisch, insbesondere ist die Beschichtung aus Zinn und/oder Nickel oder Legierungen hiervon gebildet. Durch das Beschichten soll das Zwischenelement vor Korrosion geschützt werden, insbesondere vor Kontaktkorrosion an der Grenzfläche einer sortenunreinen Verbindung. Hierzu kann die Beschichtung auch nur im unmittelbaren Kontaktbereich der sortenunreinen Verbindung angeordnet sein. In diesem Fall wäre eine Freilegung der Kontaktschicht gar nicht notwendig. Jedoch wären die Zwischenelemente in diesem Fall nicht besonders lagerstabil gebildet, weil die Kontaktfläche auf diese Weise dauerhaft der Umgebung ausgesetzt wäre und sich infolge der Bindung von Luftsauerstoff eine Oxidfläche auf der Kontaktfläche bilden würde, die der Ausbildung einer stabilen und zuverlässigen Verbindung auf der Kontaktfläche entgegenwirkt. Vorzugsweise ist das Zwischenelement deshalb zumindest in dem Bereich der Kontaktfläche mit einer schützenden Beschichtung beschichtet, so dass die Zwischenelemente in einer lagerstabilen Variante auch vorgefertigt als Bandware angeliefert und von einem Gurt abgewickelt werden können, so dass zur Fertigstellung nur noch der Kontaktbereich der Zwischenelemente von der Beschichtung freigelegt werden muss. Auch können die Zwischenelemente als Schüttgut gebildet sein.

Gemäß einer alternativen Ausführungsform wird vorgeschlagen, dass die Zwischenelemente vollständig mit einer schützenden Beschichtung versehen sind, insbesondere einer Zinn- oder Nickelbeschichtung. Eine die Zwischenelemente vollständig umschließende schützenden Beschichtung ist insbesondere vor dem Hintergrund der Vorfertigung der Zwischenelemente und der damit erforderlichen Lagerstabilität sinnvoll, da je nach Material nicht nur die Kontaktfläche der Zwischenelemente, sondern auch die übrige Oberfläche der Zwischenelemente von einer Aussetzung an Luft betroffen ist. Aluminium bildet bei längerem Kontakt mit Luftsauerstoff beispielsweise eine nicht leitende Oxidschicht, die vor der Herstellung einer stoffschlüssigen leitenden Verbindung entfernt werden muss.

Ein weiterer Vorteil einer vollständig auf die Zwischenelemente aufgetragenen Beschichtung ist eine einfache Herstellung beispielsweise über ein Tauchbeschichtverfahren.

Alternativ können auch Reibbeschichtungsverfahren, galvanische Beschichtungsverfahren, Pulverbeschichtungsverfahren, Lackierverfahren oder dergleichen zur Beschichtung der Zwischenelemente genutzt werden.

Nachfolgend wird der Gegenstand anhand einer Ausführungsbeispiele zeigenden Zeichnung näher erläutert. In der Zeichnung zeigen:
- Fig. 1: eine Verbindung eines elektrischen Leiters mit einem Anschlussteil in einer Draufsicht;
- Fig. 2: eine Schnittansicht der Verbindung eines elektrischen Leiters mit einem Anschlussteil gemäß Fig. 1;
- Fig. 3: eine weitere Schnittansicht der Verbindung eines elektrischen Leiters mit einem Anschlussteil gemäß Fig. 1;
- Fig. 4: ein erster Schritt eines Verfahrens zur Herstellung einer Verbindung eines elektrischen Leiters mit einem Anschlussteil;
- Fig. 5a, b: ein zweiter Schritt eines Verfahrens zur Herstellung einer Verbindung eines elektrischen Leiters mit einem Anschlussteil dargestellt in einer Schnittansicht;
- Fig. 6a, b: ein dritter Schritt eines Verfahrens zur Herstellung einer Verbindung eines elektrischen Leiters mit einem Anschlussteil dargestellt in einer Schnittansicht.

Nach Möglichkeit wurden in den Figuren der Zeichnung für gleiche Elemente die gleichen Bezugszeichen verwendet.

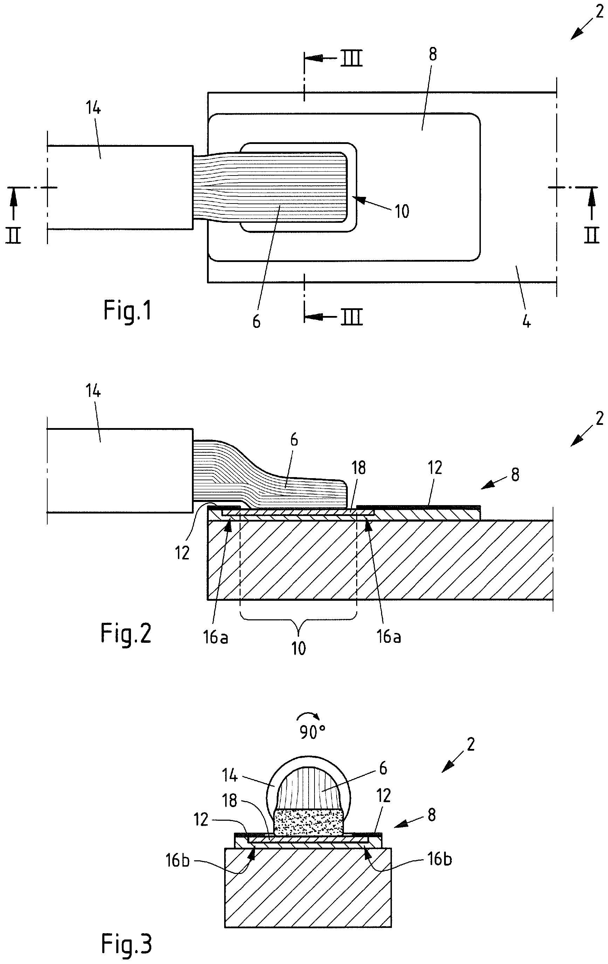

Fig. 1 zeigt eine Verbindung eines elektrischen Leiters 6 mit einem Anschlussteil 4 in einer Draufsicht. Der aus mehreren Drähten oder Litzen gebildete Leiter 6 ist von einer an dem stirnseitigen Ende des Leiters 6 entfernten Isolierung 14 umgeben. Über das stirnseitige Ende ist der Leiter 6 mit einem Zwischenelement 8 verbunden, wobei das stirnseitige Ende des Leiters 6 auf einer freigelegten Fläche 10 des Zwischenelements 8 angeordnet ist. Das Zwischenelement 8 ist wiederum auf einem Anschlussteil 4 befestigt.

Das Anschlussteil 4 ist vorteilhafterweise ein zumindest in Teilbereichen im Wesentlichen flach gebildetes Werkstück, vorzugsweise ist das Anschlussteil 4 als Flachteil, insbesondere als Flachleiter gebildet.

Der elektrische Leiter 6 ist aus einem anderen Werkstoff gebildet als das Anschlussteil 4. Vorzugsweise ist der elektrische Leiter 6 aus einem Nichteisenmetallwerkstoff, insbesondere aus einem Kupferwerkstoff gebildet, wohingegen das Anschlussteil 4, vorzugsweise aus einem Aluminiumwerkstoff gebildet ist.

Das zwischen dem elektrischen Leiter 6 und dem Anschlussteil 4 angeordnete Zwischenelement 8 ist ebenfalls vorzugsweise als Flachteil gebildet und vorteilhafterweise aus einem ähnlichen, insbesondere aus demselben Werkstoff wie das Anschlussteil 4 gebildet.

Das Zwischenelement 8 kann dabei auch als walzplattiertes Bauteil gebildet sein, bei dem beispielsweise eine aus einem Aluminiumwerkstoff gebildete Kontaktschicht 18 angeordnet sein kann, während der übrige Teil des Zwischenelements 8 aus einem Kupferwerkstoff gebildet sein kann. Ein solches Zwischenelement 8 kann beispielsweise zur Verbindung eines aus einem Kupferwerkstoff gebildeten Litzenleiters 14 mit einem aus einem Aluminiumwerkstoff gebildeten Flachleiter 4 verwendet werden. Gemäß einer alternativen Ausführungsform kann eine Kontaktschicht 18 auch aus einem Kupferwerkstoff gebildet sein, während der übrige Teil des Zwischenelements 8 aus einem Aluminiumwerkstoff gebildet sein kann. Der genaue Aufbau des Zwischenelements 8 ist erst aus Fig. 2 zu erkennen, welche eine Schnittansicht der Verbindung eines elektrischen Leiters 6 mit einem Anschlussteil 4 entlang der Linie II-II gemäß Fig. 1 zeigt. Aus Fig. 2 ist erkennbar, dass das Zwischenelement 8 mit einer Beschichtung 12 beschichtet ist, die in dem Teilbereich 10 entfernt ist. Bei der Beschichtung 12 handelt es sich vorzugsweise um eine leitende Beschichtung, insbesondere eine Nickel- oder Zinnbeschichtung.

Unterhalb der freigelegten Fläche 10 des Zwischenelements 8 ist eine metallische Kontaktschicht 18 angeordnet. Die Kontaktschicht 18 des Zwischenelements 8 ist vorzugsweise aus einem ähnlichen Werkstoff gebildet wie der elektrische Leiter 6, insbesondere aus demselben Werkstoff wie der elektrische Leiter 6, so dass der elektrische Leiter 6 über eine sortenreine Verbindung über das Zwischenelement 8 mit dem Anschlussteil 4 verbunden ist.

Das Zwischenelement 8 kann dabei, wie auch der Litzenleiter 14, aus einem Kupferwerkstoff gebildet sein und eine vorzugsweise über ein Walzplattierverfahren aufgetragene Kontaktschicht 18 aufweisen, die vorzugsweise aus einem Aluminiumwerkstoff gebildet ist und mit dem ebenfalls aus einem Aluminiumwerkstoff gebildeten Flachleiter 4 in Kontakt steht.
Die vorzugsweise zusätzlich auf dem Zwischenelement 8 angeordnete Beschichtung 12 ist vorzugsweise aus Zinn oder Nickel gebildet und in dem Anschlussbereich 10 freigelegt. Die Beschichtung 12 ist dabei vorzugsweise allseitig, auch an den Kanten des Zwischenelements 8 sowie vor und hinter der Beschichtung 12 und vor und hinter der freigelegten Schweißfläche angeordnet. Gemäß einer alternativen Ausführungsform, in der die Beschichtung aus einem Nickelwerkstoff gebildet ist kann die Beschichtung das Zwischenelement auch vollständig umfassen, ohne dass ein Bereich von der Beschichtung 12 freigelegt ist.

Aus Fig. 2 ist erkennbar, dass die Beschichtung 12 in dem freigelegten Bereich 10 des Zwischenelements 8 nur so weit entfernt worden ist, dass die Beschichtung 12 zumindest in den Endbereichen 16a noch über der metallischen Kontaktschicht 18 angeordnet ist, so dass insbesondere die für die Bildung von Kontaktkorrosion kritischen Bereiche in unmittelbarer Umgebung der Endbereiche 16a der metallischen Kontaktschicht 18 vor Luft- und Wassereintritt geschützt sind.

Fig. 3 zeigt eine Schnittansicht der Verbindung eines elektrischen Leiters 6 mit einem Anschlussteil 4 entlang der Linie III-III gemäß Fig. 1. Aus Fig. 3 ist zu erkennen, dass entsprechende Überlappungsbereiche der Beschichtung 12 und der metallischen Kontaktschicht 18 nicht nur entlang der Längsachse der Verbindung in den Endbereichen 16a, sondern auch entlang der Querachse der Verbindung in den Endbereichen 16b angeordnet sind, so dass auch die ebenfalls für die Bildung von Kontaktkorrosion kritischen Bereiche 16b vor Luft- und Wassereintritt geschützt sind.

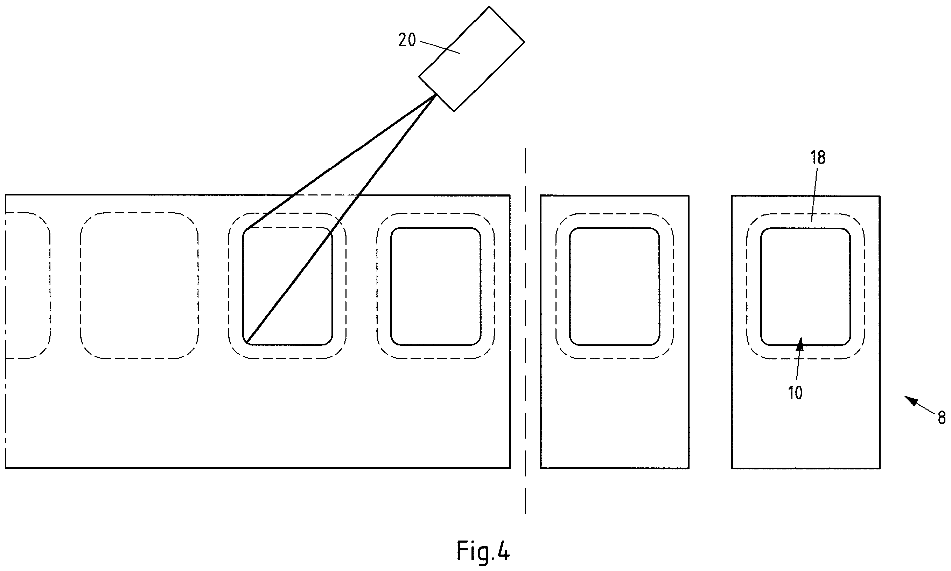

Fig. 4 zeigt einen ersten Schritt eines Verfahrens zur Herstellung einer Verbindung eines elektrischen Leiters 6 mit einem Anschlussteil 4, in dem die für die Verbindung verwendeten Zwischenelemente 8 gefertigt werden. Gemäß dem in Fig. 4 dargestellten Ausführungsbeispiel eines ersten Verfahrensschritts werden aus den als Bandware bereitgestellten vorgefertigten Zwischenelementen 8, ausgewählte Bereiche 10 einer Beschichtung 12 entfernt, so dass die dort unter der Beschichtung 12 angeordnete metallische Kontaktschicht 18 teilweise freigelegt ist. Die Entfernung der Beschichtung 12 erfolgt dabei gemäß Fig. 4, indem der Bereich 10 über einen definierten Zeitraum mit einer Strahlungsquelle 20 bestrahlt wird. Bei der Strahlungsquelle 20 handelt es sich vorzugsweise um eine Laserquelle, insbesondere um eine gepulste Laserquelle.

Vorteilhafterweise können die gegurtet oder als Schüttgut bereitgestellten vorgefertigten Zwischenelemente 8 über ein Förderband in Richtung der Strahlungsquelle 20 bewegt werden, so dass über die Geschwindigkeit des Förderbands und die Pulsdauer der Laserpulse die freigelegten Bereiche 10 eindeutig bestimmt werden können. Alternativ zur Definition der Bereiche 10 über die Geschwindigkeit des Förderbands und die Pulsdauer der Laserpulse können auch Schablonen verwendet werden, die zwischen der Strahlungsquelle 20 und den Zwischenelementen 8 positioniert werden können. So kann alternativ zur Verwendung einer gepulsten Strahlungsquelle 20 auch eine kontinuierlich emittierende Strahlungsquelle zur Entfernung der Bereiche 10 verwendet werden.

Nach Entschichtung im Bereich 10 können die einzelnen Zwischenelemente 8 - falls notwendig - mit einer hier nicht dargestellten Stanzvorrichtung ausgestanzt werden.

Die Entfernung der Beschichtung 12 kann alternativ auch in einem späteren Verfahrensschritt, nach der im Folgenden beschriebenen Herstellung einer stoffschlüssigen Verbindung zwischen dem Zwischenelement 8 und dem Anschlussteil 4 erfolgen.

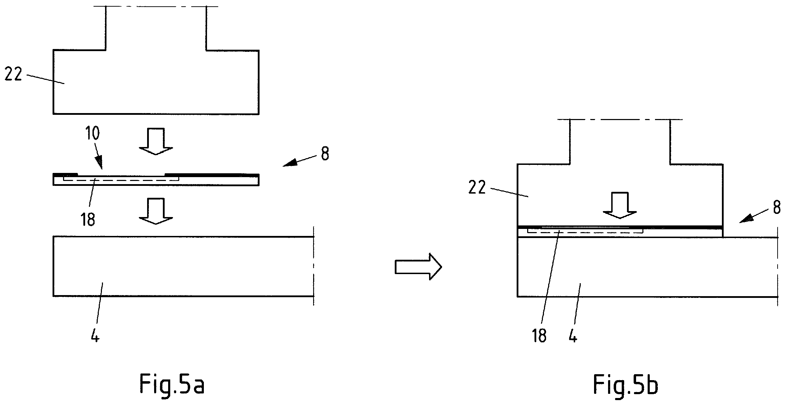

Fig. 5a, b zeigen einen zweiten Schritt eines Verfahrens zur Herstellung einer Verbindung eines elektrischen Leiters 6 mit einem Anschlussteil 4, dargestellt in einer Schnittansicht. In dem zweiten Verfahrensschritt wird zunächst das Zwischenelement 8 mit Hilfe eines Ultraschall-Schweißverfahrens stoffschlüssig mit dem Anschlussteil 4 verbunden.

Es ist erkannt worden, dass dadurch, dass zunächst das Zwischenelement 8 mit Hilfe eines Ultraschall-Schweißverfahrens stoffschlüssig mit dem Anschlussteil 4 verbunden wird, bevor erst anschließend der elektrische Leiter 6 über die metallische Kontaktschicht 18 mit dem Zwischenelement 8 verbunden wird, eine deutlich langlebigere und zuverlässigere stoffschlüssige Verbindung zwischen dem elektrischen Leiter 6 und dem Zwischenelement 8 hergestellt werden kann.

Dies lässt sich dadurch erklären, dass die metallische Kontaktschicht 18 nach Entfernung der Beschichtung 12 besonders anfällig für eine Reaktion mit Sauerstoff ist, wodurch sich auf der metallischen Kontaktschicht 18 eine Oxidschicht bildet, die einer stabilen und zuverlässigen stoffschlüssigen Verbindung zwischen dem elektrischen Leiter 6 und dem Zwischenelement 8 entgegenwirkt. Erst durch das Aufsetzen einer Sonotrode 22 auf die metallische Kontaktschicht 18 zur Ausbildung der stoffschlüssigen Verbindung zwischen dem Zwischenelement 8 und dem Anschlussteil 4 wird die Oberfläche der metallischen Kontaktschicht 18 so modifiziert, dass anschließend eine bessere Anbindung des Leiters 6 an das Zwischenelement 8 erfolgen kann.

Fig. 5a zeigt dabei die Anordnung des Zwischenelements 8 zwischen dem Anschlussteil 4 und der Sonotrode 22.

In Fig. 5b ist die Ausbildung der stoffschlüssigen Verbindung des Zwischenelements 8 mit dem unter diesem angeordneten Anschlussteil 4 dargestellt. Hier liegt die Sonotrode 22 nun direkt auf dem Zwischenelement 8 auf, um an der Grenzfläche des Zwischenelements 8 und des Anschlussteils 4 Ultraschallschwingungen zu induzieren, um so eine stoffschlüssige Verbindung zwischen dem Anschlussteil 4 und dem Zwischenelement 8 herbeizuführen.

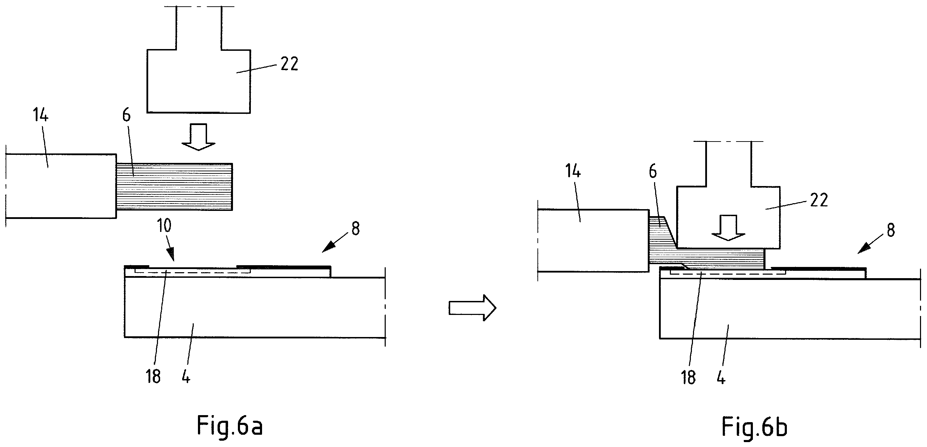

Fig. 6a, b zeigen einen dritten Schritt eines Verfahrens zur Herstellung einer Verbindung eines elektrischen Leiters 6 mit einem Anschlussteil 4, dargestellt in einer Schnittansicht. In dem dritten Verfahrensschritt wird schließlich der elektrische Leiter 6 mit Hilfe eines Ultraschall-Schweißverfahrens stoffschlüssig mit dem Zwischenelement 8 verbunden. Der elektrische Leiter 6 ist dabei im Bereich der freigelegten Fläche 10 auf der metallischen Kontaktschicht angeordnet, so dass ein elektrischer Kontakt mit dem Anschlussteil 4 über eine sortenreine Verbindung hergestellt ist.

Fig. 6a zeigt dabei die Anordnung des elektrischen Leiters 6 zwischen dem Zwischenelement 8 und dem Anschlussteil 4.

In Fig. 6b ist die Ausbildung der stoffschlüssigen Verbindung des elektrischen Leiters 6 mit dem unter diesem angeordneten Zwischenelement 8 dargestellt. Hier liegt die Sonotrode 22 nun direkt auf dem elektrischen Leiter 6 auf, um an der Grenzfläche des elektrischen Leiters 6 und der metallischen Kontaktschicht 18 des Zwischenelements Ultraschallschwingungen zu induzieren, um so eine stoffschlüssige Verbindung zwischen dem elektrischen Leiter 6 und dem Zwischenelement 8 herbeizuführen.

Da die von der Beschichtung freigelegten Bereiche 10 - wie erkannt worden ist - besonders anfällig für die Bindung von Sauerstoff sind und dies der Ausbildung einer stabilen und zuverlässigen Verbindung des elektrischen Leiters 6 auf der freigelegten Fläche 10 entgegenwirkt, können neben der Modifizierung der Oberfläche der metallischen Kontaktschicht 18, zur weiteren Erhöhung der Stabilität und Zuverlässigkeit der Verbindung eines elektrischen Leiters 6 mit einem Anschlussteil 4, einzelne Verfahrensschritte des gegenständlichen Verfahrens oder auch das gesamte gegenständliche Verfahren zumindest teilweise unter Ausschluss von Luftsauerstoff, vorzugsweise in evakuierten Räumen durchgeführt werden.

Eine Durchführung des ersten Verfahrensschritts unter Vakuum hat zudem den zusätzlichen positiven Effekt der Möglichkeit einer einfachen Entfernung der durch die Strahlungsquelle 22 verdampften Beschichtungspartikel über die zu verwendenden Pumpen.

## Patentansprüche

1. Verfahren zur Herstellung einer Verbindung eines elektrischen Leiters (6) mit einem Anschlussteil (4) über ein zumindest bimetallisches Zwischenelement (8),
- wobei der elektrische Leiter (6) aus mehreren Drähten oder Litzen eines ersten Metallwerkstoffs und das Anschlussteil (4) aus einem von dem ersten Metallwerkstoff verschiedenen zweiten Metallwerkstoff gebildet ist, umfassend die Schritte:
- stoffschlüssiges Verbinden des Zwischenelements (8) mit dem Anschlussteil (4), wobei das Zwischenelement (8) durch ein Ultraschallschweißverfahren unmittelbar über eine einer ersten Oberfläche des Zwischenelements (8) gegenüberliegende zweite Oberfläche des Zwischenelements (8) stoffschlüssig mit dem Anschlussteil (4) verbunden wird;
- stoffschlüssiges Verbinden des elektrischen Leiters (6) mit dem Zwischenelement (8), wobei der elektrische Leiter (6) durch ein Ultraschallschweißverfahren stoffschlüssig mit einer an der ersten Oberfläche des Zwischenelements (8) angeordneten metallischen Kontaktschicht (18) verbunden wird, wobei die Kontaktschicht (18) vor dem Verbinden mit dem elektrischen Leiter (6) durch ein Entfernen einer Schutzschicht des Zwischenelements freigelegt wird,
wobei das Zwischenelement (8) aus dem zweiten Metallwerkstoff und die an dem Zwischenelement (8) angeordnete metallische Kontaktschicht (18) aus dem ersten Metallwerkstoff gebildet ist.

2. Verfahren nach Anspruch 1,
**dadurch gekennzeichnet, dass**
der elektrische Leiter (6) mit dem Zwischenelement (8) unmittelbar über die an dem Zwischenelement (8) angeordnete metallische Kontaktschicht (18) stoffschlüssig verbunden wird.

3. Verfahren nach einem der vorangehenden Ansprüche,
**dadurch gekennzeichnet, dass**
das Freilegen der metallischen Kontaktschicht (18) durch das Entfernen einer Beschichtung (12) mittels einer Strahlquelle, insbesondere mittels einer Laserstrahlquelle erfolgt.

4. Verfahren nach einem der vorangehenden Ansprüche,
**dadurch gekennzeichnet, dass**
die Entfernung der Beschichtung (12) im Wesentlichen rückstandsfrei erfolgt.

5. Verfahren nach einem der vorangehenden Ansprüche,
**dadurch gekennzeichnet, dass**
das Zwischenelement (8) vor dem stoffschlüssigen Verbinden mit dem Anschlussteil (4) von einem Coil abgewickelt und als Bandware bereitgestellt wird.

6. Verfahren nach einem der vorangehenden Ansprüche,
**dadurch gekennzeichnet, dass**
das stoffschlüssige Verbinden des Zwischenelements (8) mit dem Anschlussteil (4) derart ausgeführt wird, dass die metallische Kontaktschicht (18) des Zwischenelements (8) nach dem stoffschlüssigen Verbinden des Zwischenelements (8) mit dem Anschlussteil (4), eine für die Herstellung einer stoffschlüssigen Verbindung des elektrischen Leiters (6) mit der metallischen Kontaktschicht (18) optimierte Oberflächenstruktur aufweist.

7. Verfahren nach einem der vorangehenden Ansprüche,
**dadurch gekennzeichnet, dass**
die zur Ausbildung der stoffschlüssigen Verbindung des Zwischenelements (8) mit dem Anschlussteil (4) verwendete Sonotrode (22) direkt auf die freigelegte metallischen Kontaktfläche aufgesetzt wird.

8. Verfahren nach einem der vorangehenden Ansprüche,
**dadurch gekennzeichnet, dass**
der Sonotrodenkopf der verwendeten Sonotrode (22) an die Oberflächenstruktur des elektrischen Leiters (6) angepasst sind, insbesondere eine zu dem Oberflächenprofil des elektrischen Leiters (6) komplementäre Schweißkontur aufweist.

9. Verfahren nach einem der vorangehenden Ansprüche,
**dadurch gekennzeichnet, dass**
zumindest Teile des Verfahrens, insbesondere das Freilegen der metallischen Kontaktschicht (18) und/oder das stoffschlüssige Verbinden des Zwischenelements (8) mit dem Anschlussteil (4) zumindest teilweise unter Ausschluss von Sauerstoff, insbesondere unter Schutzgasatmosphäre durchgeführt werden.

10. Verbindung eines aus mehreren Drähten oder Litzen eines ersten Metallwerkstoffs gebildeten elektrischen Leiters (6) mit einem Anschlussteil (4), wobei das Anschlussteil (4) aus einem von dem ersten Metallwerkstoff verschiedenen zweiten Metallwerkstoff gebildet ist,
wobei der elektrische Leiter (6) und das Anschlussteil (4) über ein unmittelbar zwischen dem elektrischen Leiter (6) und dem Anschlussteil (4) angeordnetes zumindest bimetallisches Zwischenelement (8) elektrisch miteinander verbunden sind,
**dadurch gekennzeichnet, dass**
das Zwischenelement (8) über eine an der erste Oberfläche des Zwischenelements (8) angeordnete metallische Kontaktschicht (18) stoffschlüssig mit dem elektrischen Leiter (6) verbunden ist, wobei die Kontaktschicht (18) durch ein Entfernen einer Schutzschicht des Zwischenelements freigelegt ist,
und über eine gegenüberliegende zweite Oberfläche des Zwischenelements (8) stoffschlüssig mit dem Anschlussteil (4) verbunden ist, wobei das Zwischenelement (8) aus dem zweiten Metallwerkstoff und die an dem Zwischenelement (8) angeordnete metallische Kontaktschicht (18) aus dem ersten Metallwerkstoff gebildet ist.

11. Verbindung nach Anspruch 10,
**dadurch gekennzeichnet, dass**
- die erste Oberfläche des Zwischenelements (8) zumindest im Bereich der Grenzfläche zu der metallischen Kontaktschicht (18) eine Beschichtung (12) aufweist, vorzugsweise eine von dem ersten und zweiten Metallwerkstoff verschiedene Beschichtung (12), insbesondere eine Zinn- oder Nickelbeschichtung.

12. Verbindung nach Anspruch 10 oder 11,
**dadurch gekennzeichnet, dass**
das Zwischenelement (8)über die an der ersten Oberfläche des Zwischenelements (8) angeordnete metallische Kontaktschicht (18) stoffschlüssig mit dem elektrischen Leiter (6) verbunden ist,
und das Zwischenelement (8) über eine der ersten Oberfläche gegenüberliegende zweite Oberfläche des Zwischenelements (8) stoffschlüssig mit dem Anschlussteil (4) verbunden ist.

13. Verbindung nach einem der Ansprüche 10 bis 12,
**dadurch gekennzeichnet, dass**
der elektrische Leiter (6) als Flechtdraht oder als Litzenleiter (14), insbesondere als konzentrischer Litzenleiter (14) gebildet ist und/oder
das Anschlussteil (4) als Flachteil, insbesondere als Flachleiter gebildet ist.

14. Verbindung nach einem der Ansprüche 10 bis 13,
**dadurch gekennzeichnet, dass**
die metallische Kontaktschicht (18) im Wesentlichen flächenbündig in einem Teilbereich (10) der ersten Oberfläche, insbesondere in einer Nut des Zwischenelements (8) angeordnet ist.

## Claims

1. Method for manufacturing a connection of an electrical conductor (6) to a terminal part (4) via an at least bimetallic intermediate element (8),
- wherein the electrical conductor (6) is formed of a plurality of wires or strands of a first metal material and the terminal (4) is formed of a second metal material different from the first metal material, comprising the steps
- materially bonding the intermediate element (8) to the connecting part (4), wherein the intermediate element (8) is bonded to the connecting part (4) by an ultrasonic welding process directly via a second surface of the intermediate element (8) opposite a first surface of the intermediate element (8);
- materially bonding the electrical conductor (6) to the intermediate element (8), wherein the electrical conductor (6) is bonded to a metallic contact layer (18) arranged on the first surface of the intermediate element (8), by an ultrasonic welding process, wherein the contact layer (18) is exposed by removing a protective layer of the intermediate element before bonding to the electrical conductor (6),
wherein the intermediate element (8) is formed from the second metal material and the metallic contact layer (18) arranged on the intermediate element (8) is formed from the first metal material.

2. Method according to claim 1,
**characterized in that**
the electrical conductor (6) is materially bonded to the intermediate element (8) directly via the metallic contact layer (18) arranged on the intermediate element (8).

3. Method according to one of the preceding claims,
**characterized in that**
the exposure of the metallic contact layer (18) is effected by removing a coating (12) by means of a beam source, in particular by means of a laser beam source.

4. Method according to one of the preceding claims,
**characterized in that**
the removal of the coating (12) is essentially residue-free.

5. Method according to one of the preceding claims,
**characterized in that**
the intermediate element (8) is unwound from a coil and provided as strip material before being bonded to the connecting part (4).

6. Method according to one of the preceding claims,
**characterized in that**
the materially bonding of the intermediate element (8) to the connection part (4) is carried out in such a way that the metallic contact layer (18) of the intermediate element (8), after the materially bonding of the intermediate element (8) to the connection part (4), has a surface structure optimized for manufacturing a materially bonded connection of the electrical conductor (6) to the metallic contact layer (18).

7. Method according to one of the preceding claims,
**characterized in that**
the sonotrode (22) used to form the material bond between the intermediate element (8) and the connection part (4) is placed directly on the exposed metallic contact surface.

8. Method according to one of the preceding claims,
**characterized in that**
the sonotrode head of the sonotrode (22) used is adapted to the surface structure of the electrical conductor (6), in particular has a welding contour complementary to the surface profile of the electrical conductor (6).

9. Method according to one of the preceding claims,
**characterized in that**
at least parts of the process, in particular the exposing of the metallic contact layer (18) and/or the material-locking connection of the intermediate element (8) to the connecting part (4) are carried out at least partially in the absence of oxygen, in particular in a protective gas atmosphere.

10. Connection of an electrical conductor (6) formed from a plurality of wires or strands of a first metal material to a connection part (4),
wherein the connecting part (4) is formed of a second metal material different from the first metal material,
the electrical conductor (6) and the connecting part (4) being electrically bonded to one another via an at least bimetallic intermediate element (8) arranged directly between the electrical conductor (6) and the connecting part (4),
**characterized in that**
the intermediate element (8) is materially bonded to the electrical conductor (6) via a metallic contact layer (18) arranged on the first surface of the intermediate element (8), wherein the contact layer (18) is exposed by removing a protective layer of the intermediate element,
and is materially bonded to the connecting part (4) via an opposite second surface of the intermediate element (8), wherein the intermediate layer is formed from the second metal material and the metallic contact layer (18) arranged on the intermediate element (18) is formed from the first metal material.

11. Connection according to claim 10,
**characterized in that**
- the first surface of the intermediate element (8) has a coating (12) at least in the region of the interface with the metallic contact layer (18), preferably a coating (12) different from the first and second metal material, in particular a tin or nickel coating.

12. Connection according to claim 10 or 11,
**characterized in that**
the intermediate element (8) is materially bonded to the electrical conductor (6) via the metallic contact layer (18) arranged on the first surface of the intermediate element (8),
and the intermediate element (8) is materially bonded to the connecting part (4) via a second surface of the intermediate element (8) opposite the first surface.

13. Connection according to one of claims 10 to 12,
**characterized in that**
the electrical conductor (6) is formed as a braided wire or as a stranded conductor (14), in particular as a concentric stranded conductor (14) and/or the connecting part (4) is formed as a flat part, in particular as a flat conductor.

14. Connection according to one of claims 10 to 13,
**characterized in that**
the metallic contact layer (18) is arranged substantially flush in a partial area (10) of the first surface, in particular in a groove of the intermediate element (8).

## Revendications

1. Procédé de fabrication d'un raccordement d'un conducteur électrique (6) à une pièce de raccordement (4) par le biais d'au moins un élément intermédiaire (8) bimétallique, sachant que le conducteur électrique (6) est composé de plusieurs fils ou de torons consistant en un premier matériau métallique et la pièce de raccordement (4) en un deuxième matériau métallique, qui diffère du premier, procédé comprenant les étapes :
- raccordement par liaison de matière de l'élément intermédiaire (8) à la pièce de raccordement (4), sachant que l'élément intermédiaire (8), selon un procédé de soudure au laser, est raccordé directement à la pièce de raccordement (4) par liaison de matière, par le biais d'une deuxième surface de l'élément intermédiaire (8), opposée à une première surface de l'élément intermédiaire (8),
- raccordement par liaison de matière du conducteur électrique (6) à l'élément intermédiaire (8), sachant que le conducteur électrique (6), selon un procédé de soudure au laser, est raccordé par liaison de matière à une couche de contact métallique (18), disposée sur la première surface de l'élément intermédiaire (8), la couche de contact métallique (18) étant dénudée par suppression d'une couche de protection de l'élément intermédiaire, avant le raccordement au conducteur électrique (6), l'élément intermédiaire (8) étant fabriqué avec le deuxième matériau métallique et la couche de contact métallique (18), disposée sur l'élément intermédiaire (8), étant fabriquée avec le premier matériau métallique.

2. Procédé selon la revendication 1,
**caractérisé en ce que**
le conducteur électrique (6) est relié directement avec l'élément intermédiaire (8) par liaison de matière, par le biais de la couche de contact métallique (18), disposée sur l'élément intermédiaire (8).

3. Procédé selon l'une des revendications précédentes,
**caractérisé en ce que**
le dénudage de la couche de contact métallique (18) est effectué par la suppression d'un revêtement (12) au moyen d'une source de rayonnement, en particulier au moyen d'une source de rayonnement laser.

4. Procédé selon l'une des revendications précédentes,
**caractérisé en ce que**
la suppression du revêtement (12) est effectuée sensiblement exempte de résidu.

5. Procédé selon l'une des revendications précédentes
**caractérisé en ce que**
l'élément intermédiaire (8), avant le raccordement à la pièce de raccordement (4) par liaison de matière, est déroulé d'une bobine et mis à disposition en tant que produit en bande.

6. Procédé selon l'une des revendications précédentes,
**caractérisé en ce que**
le raccordement par liaison de matière de l'élément intermédiaire (8) à la pièce de raccordement (4) est réalisé de sorte que la couche de contact métallique (18) de l'élément intermédiaire (8) présente, après le raccordement par liaison de matière de l'élément intermédiaire (8) à la pièce de raccordement (4), une structure de surface optimalisée pour la réalisation d'un raccordement par liaison de matière du conducteur électrique (6) à la couche de contact métallique (18).

7. Procédé selon l'une des revendications précédentes,
**caractérisé en ce que**
la sonotrode (22), utilisée pour la réalisation du raccordement par liaison de matière de l'élément intermédiaire (8) à la pièce de raccordement (4), est placée directement sur la surface de contact métallique, dénudée.

8. Procédé selon l'une des revendications précédentes,
**caractérisé en ce que**
la tête de sonotrode de la sonotrode (22) utilisée est adaptée à la structure de la surface du conducteur électrique (6), qu'elle présente en particulier un contour de soudure complémentaire par rapport au profil de surface du conducteur électrique (6).

9. Procédé selon l'une des revendications précédentes,
**caractérisé en ce que**
tout au moins des étapes du procédé, en particulier le dénudage de la couche de contact métallique (18) et / ou le raccordement par liaison de matière de l'élément intermédiaire (8) à la pièce de raccordement (4), sont exécutées, tout au moins partiellement, à l'abri de l'oxygène, en particulier sous une atmosphère de gaz protecteur.

10. Raccordement d'un conducteur électrique (6), composé de plusieurs fils ou torons, fabriqués avec un premier matériau métallique, à une pièce de raccordement (4), la pièce de raccordement (4) étant fabriquée avec un deuxième matériau métallique, différant du premier matériau métallique, sachant que le conducteur électrique (6) et la pièce de raccordement (4) sont reliés ensemble électriquement par un élément intermédiaire bimétallique (8), qui est disposé directement entre le conducteur électrique (6) et la pièce de raccordement (4),
**caractérisé en ce que**
l'élément intermédiaire (8) est raccordé par liaison de matière au conducteur électrique (6) par l'intermédiaire d'une couche de contact métallique (18), disposée sur la première surface de l'élément intermédiaire (8), la couche de contact métallique (18) étant dénudée par suppression d'une couche de protection de l'élément intermédiaire, et raccordé par liaison de matière à la pièce de raccordement (4) par l'intermédiaire d'une deuxième surface de l'élément intermédiaire (8), située à l'opposé, sachant que l'élément intermédiaire (8) est fabriqué avec le deuxième matériau métallique et que la couche de contact métallique (18), disposée sur l'élément intermédiaire (8), est fabriquée avec le premier matériau métallique.

11. Raccordement selon la revendication 10,
**caractérisé en ce que**
la première surface de l'élément intermédiaire (8) présente, au moins dans la zone de la surface limite, avoisinant la couche de contact métallique (18), un revêtement (12), qui diffère du premier et du deuxième matériau métallique, en particulier une couche d'étain ou de nickel.

12. Raccordement selon revendication 10 ou 11,
**caractérisé en ce que**
l'élément intermédiaire (8) est raccordé par liaison de matière au conducteur électrique (6) par l'intermédiaire de la couche de contact métallique (18) disposée sur la première surface de l'élément intermédiaire (8), et que l'élément intermédiaire (8) est raccordé par liaison de matière à la pièce de raccordement (4) par l'intermédiaire d'une deuxième surface de l'élément intermédiaire (8), située à l'opposé de la première surface.

13. Raccordement l'une des revendications 10 à 12,
**caractérisé en ce que**
le conducteur électrique (6) est réalisé en tant que toron ou en tant que fil multibrin (14), en particulier en tant que conducteur multibrin concentrique (14) et / ou que la pièce de raccordement (4) est réalisée en tant que pièce plate, en particulier en tant que conducteur plat.

14. Raccordement selon l'une des revendications 10 à 13,
**caractérisé en ce que**
la couche de contact métallique (18) est disposée sensiblement à fleur dans une partie (10) de la première surface, en particulier dans une rainure de l'élément intermédiaire (8).
